(19) Europäisches Patentamt
European Patent Office
Office européen des brevets

(11) Publication number: 0 077 044
B1

(12) EUROPEAN PATENT SPECIFICATION

(45) Date of publication of patent specification: 07.05.86

(51) Int. Cl.$^4$: C 10 G 11/18

(21) Application number: 82109326.7

(22) Date of filing: 08.10.82

# (54) Method to passivate metals deposited on a cracking catalyst during reduced crude processing.

(30) Priority: 13.10.81 US 311725

(43) Date of publication of application:
20.04.83 Bulletin 83/16

(45) Publication of the grant of the patent:
07.05.86 Bulletin 86/19

(84) Designated Contracting States:
AT BE DE FR GB IT NL SE

(56) References cited:
EP-A-0 065 627
US-A-3 122 511
US-A-4 268 416
US-A-4 280 895

(73) Proprietor: ASHLAND OIL, INC.
R.C. Willson, Jr. P.O. Box 391, BL-5
Ashland Kentucky 41114 (US)

(72) Inventor: Kovach, Stephen M.
3430 Yuma Drive
Ashland Kentucky 41101 (US)
Inventor: Palmer, James L.
1707 Potter Street
Flatwoods Kentucky 41139 (US)

(74) Representative: Staub, Gabriella, Dr.-Ing. et al
Baaderstrasse 3
D-8000 München 5 (DE)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Technical field

This invention relates to processes for converting carbo-metallic oils into lighter fractions and especially to processes for converting heavy hydrocarbons containing high concentrations of coke precursors and heavy metals into gasoline and other liquid hydrocarbon fuels. In one aspect, the invention is related to the passivation of contaminant metals, Ni-V-Fe-Cu, deposited on the cracking catalyst during reduced crude processing by the reaction of active nitrogen containing compounds with the metal containing regenerated catalyst. In addition, the metals, especially iron and vanadium can be converted to the high melting, water insoluble nitrides by reaction with ammonia which facilitates disposal of spent catalyst.

Background art

An important process for the conversion of the higher boiling fractions of crude oil, such as vacuum gas oil (VGO) and reduced crudes, to gasoline and heating fuels is fluid catalytic cracking. Fluid catalytic cracking is commonly referred to as FCC when processing VGO feedstocks and RCC for reduced crude feedstocks. The feedstock is contacted with a fluidizable catalyst at elevated temperatures, short contact times, low pressures; separation of catalyst and gaseous products affected with stripping of the coked catalyst followed by regeneration and recycle of the regenerated catalyst to repeat the process.

One of the major problem areas is the deposition of the contaminant metals present in the VGO and reduced crudes on the catalyst during fluid cracking operations. These contaminant metals include Ni-V-Fe-Cu. As the concentration of these metals increase on the catalyst, the rate of undesirable reactions generated by these contaminant metals increases. These undesirable reactions are dehydrogenation, coking, and methyl clipping which leads to increased feedstock conversion accompanied by lower selectivity to desired products and increased coke production. The dehydrogenation reaction leads to increased hydrogen production, methyl clipping to increased methane production and the production of these light gases give decreased gasoline production (lower selectivity) and increase the demand for compressor capacity to handle these light gases.

The art teaches many techniques to handle the undesirable reactions exhibited by these contaminant metals. These techniques include contaminant metal removal and passivation. Examples of techniques for metal removal are taught and claimed in U.S. Patents 3,122,511; 3,122,512; 3,148,155; 3,192,151 and 4,014,815. Examples of techniques for metal passivation are taught and claimed in U.S. Patents 3,711,422 (antimony); 3,977,963 (manganese); 4,101,417 (tin); 4,192,770 (boron). Other techniques for passivating or reducing the undesirable reactions of these contaminant metals include the precoking with methane as described in U.S. Patent 3,120,484; sulfiding of the metals to form the metal sulfide as described in U.S. Patent 3,838,038 the reduction of the metal oxides with hydrogen and carbon monoxide in U.S. Patents 4,268,416; 4,280,895 and 4,280,896.

We have found a process for passivating an individual metal contaminant on a fluid cracking catalyst by reaction with a select reducing gas and which also renders a metal contaminant water insoluble when the spent catalyst is withdrawn and discarded.

Disclosure of the invention

This invention provides a process and method for the passivation of contaminant metals (Ni-V-Fe-Cu) on a fluid cracking catalyst containing significant levels of metals of at least about 1,000 ppm by reaction with active nitrogen containing compounds. In particular, this invention is concerned with contacting the regenerated fluid cracking catalyst after the regenerator and prior to transfer to the riser with ammonia to reduce the contaminant metals from the oxide form to the free metal or nitride state. This invention is particularly useful in the processing of feedstocks containing high levels of Conradson carbon and contaminant metals in RCC units and the passivation of the subsequent high metal containing RCC catalyst. Another aspect of this invention is the conversion of a contaminant metal, in particular vanadium, to the water insoluble nitride thus permitting disposal of the spent deactivated cracking by known landfill techniques.

It has long been known that reduced crudes with high metals content present serious problems as to catalyst deactivation at high metals on catalyst content, such as 5,000—10,000 ppm. It has now been recognized that reduced crudes with high V/Ni ratios are becoming the norm and that high vanadium levels are also causing these undesirable side reactions resulting in non-selective cracking of the feed and decreased selectivity to gasoline. Another attendant problem with high metals level containing catalysts is their disposal. At the lower metal levels (1,000 ppm or less) encountered in FCC operations, spent-deactivated catalysts where disposed of by conventional landfill technology. However, at the higher levels, 5,000—20,000 ppm Ni+V, the question of metal leachability is raised, especially in the case of vanadium. By reducing the metals, especially vanadium, the deleterious side reactions during cracking are reduced and secondly, vanadia can be converted to a water insoluble form.

The problems of the prior art caused by metal containing contaminants especially vanadium, are overcome by employing the select passivating agent and method of this invention. Although FCC operations are also contemplated, this invention is especially effective in the processing of reduced crudes

and other carbo-metallic feeds with high metals, high vanadium to nickel ratios and high Conradson carbon values. This RCC feed having high metal and Conradson carbon values is preferably contacted in a riser with a zeolite containing catalyst of relatively high surface area at temperatures above about 510°C (950°F). Residence time of the oil in the riser is below 5 seconds, preferably 0.5—2 seconds. The preferred catalyst is spray dried composition in the form of microspherical particles generally in the size range of 10 to 200 microns, preferably 20 to 150 microns and more preferably between 40 and 80 microns, to ensure adequate fluidization properties.

The RCC feed is introduced at the bottom of the riser and contacts the catalyst at a temperature of 690,5—787,7°C (1275—1450°F) to yield a temperature at the exit of the riser in the catalyst disengagement vessel of approximately 510—593°C (950—1100°F). Along with the RCC feed, water, steam, naphtha, flue gas, or other vapors may be introduced to aid in vaporization and act as a lift gas to control residence time and provide other benefits described in Ashland's co-pending RCC applications.

Coked catalyst is rapidly separated from the hydrocarbon vapors at the exit of the riser by employing the vented riser concept developed by Ashland Oil, Inc. and described in U.S. Patent Nos. 4,066,533 and 4,070,159 to Myers, et al, which patents are incorporated herein by reference. During the course of the reaction in the riser, the metal and Conradson carbon compounds are deposited on the catalyst. After separation in the vented riser, the coked catalyst is deposited as a dense but fluffed bed at the bottom of the disengagement vessel, transferred to a stripper and then to the regeneration zone. The coked catalyst is then contacted with an oxygen containing gas to remove the carbonaceous material through combustion to carbon oxides to yield a regenerated catalyst containing less than 0.1 wt% carbon, preferably less than 0.05 wt.% carbon. The regenerated catalyst is then passed to the regenerated catalyst standpipe where it is contacted with ammonia for passivation and then recycled to the riser where it again joins high metal and Conradson carbon containing feed to repeat the cycle.

This application describes a new approach to offsetting the adverse effect of Ni-V-Fe-Cu deposited on the catalyst, especially vanadium pentoxide, by treating the regenerated catalyst with ammonia prior to contact of the regenerated catalyst with fresh feed at the bottom of the riser. In addition, this concept of passivation with ammonia can be practiced in a separate treating vessel for passivation or conversion of the vanadia to vanadium nitride. This separate vessel can be utilized to convert vanadia to water insoluble vanadium nitride on spent-deactivated catalyst withdrawn from the unit for eventual discard by well known landfill techniques.

## Brief descriptions of the drawings

The invention may be further better understood by reference to the following description provided in conjunction with the accompanying drawings in which:

Figure 1 is a schematic diagram of an apparatus for carrying out the process of the invention which entails the addition of ammonia to the regenerated catalyst.

Figure 2 is a schematic diagram of an apparatus for carrying out the process of the invention which entails contacting ammonia with the spent catalyst prior to withdrawal from the unit.

## Best mode for carrying out the invention

The catalysts which can be utilized in the process of this invention include those known as fluid catalytic cracking catalysts and referred to as FCC catalysts and RCC catalysts.

The catalytically active cracking zeolite in the catalysts that can be utilized in this invention is a crystalline aluminosilicate zeolite, commonly known as molecular sieves. Molecular sieves are initially formed as alkali metal aluminosilicates, which are dehydrated forms of crystalline hydrous siliceous zeolites. However, since the alkali form does not have appreciable activity and alkali metal ions are deleterious to cracking processes, the aluminosilicates are ion exchanged to replace sodium with some other ion such as, for example, ammonium ions and/or rare earth metal ions. The silica and alumina making up the structure of the zeolite are arranged in a definite crystalline pattern containing a large number of small cavities interconnected by smaller uniform channels or pores. The effective size of these pores is usually between about 4A and 12A.

The catalytically active cracking zeolites that can be employed in accordance with this invention include both natural and synthetic zeolites. An example of natural occurring zeolites would include faujasite and the like. Suitable synthetic zeolites include zeolite Y, L, ZK-4B, B, E, F, H, J, M, Q, T, W, X, Z, ZSM-types, alpha, beta and omega. These catalytically active cracking zeolites may be used in concentration ranges from 10 to 40 weight percent and would include combinations of one or more of the active zeolites.

The matrix material of the catalysts utilized in this invention should possess good hydrothermal stability. Examples of materials exhibiting relatively stable pore characteristics are alumina, silica-alumina, silica, clays such as kaolin, meta-kaolin, halloysite, anauxite, dickite and/or macrite, and combinations of these materials. Other clays, such as montmorrillonite, may be added to increase the acidity of the matrix. Clay may be used in natural state or thermally modified.

Representative feedstocks contemplated for use with the invention include whole crude oils, light fractions of crude oils such as light gas oils, heavy gas oils, and vacuum gas oils; and heavy fractions of crude oils such as topped crude, reduced crude, vacuum fractionator bottoms, other fractions containing

heavy residuà, coal-derived oils, shale oils, waxes, untreated or deasphalted-residua, and blends of such fractions with gas oils and the like. A high vanadium feed for FCC processing is one having more than 0.1 ppm vanadium, preferably 1.0 to 5.0 ppm where a relatively small amount of reduced crude (5—25%) is mixed with VGO to provide an FCC feedstock. A high vanadium feed for RCC processing is one having more than 1.0 ppm vanadium, preferably more than about 5.0 ppm. In either case, the preferred weight ratio of vanadium to nickel in feed without additive nickel is in the range of from about 1:3 to 5:1, more preferably greater than 1:1.

The preferred feeds capable of being cracked by these methods and apparatuses are comprised of 100% or less of 343,3°C (650°F)+material of which at least 5 wt.%, preferably at least 10 wt.%, does not boil below about 551,6°C (1025°F). The terms "high molecular weight" and/or "heavy" hydrocarbons refer to those hydrocarbon fractions having a normal boiling point of at least 551,6°C (1025°F) and include non-boiling hydrocarbons, i.e., those materials which may not boil under any conditions.

A carbo-metallic feed for purposes of this invention is one having a heavy metal content of at least about 4 ppm nickel equivalents (ppm total metals being converted to nickel equivalents by the formula:

$$Ni\ eq.=Ni+V/4.8+Fe/7.1+Cu/1.23,$$

a Conradson carbon residue value greater than about 1.0, and a vanadium content of at least 1.0 ppm. The feedstocks for which the invention is particularly useful will have a heavy metal content of at least about 5 ppm nickel equivalents, a vanadium content of at least 2.0 ppm, and a Conradson residue of at least about 2.0. The greater the heavy metal content and the greater the proportion of vanadium in that heavy metal content, the more advantageous the passivating agent and processes of this invention becomes. A particularly preferred feedstock for treatment by the process of the invention includes a reduced crude comprising 70% or more of a 343,3°C (650°F)+material having a fraction greater than 20% boiling about 551,6°C (1025°F) at atmospheric pressure, a metals content of greater than 5.5 ppm nickel equivalents of which at least 5 ppm is vanadium, a vanadium to nickel atomic ratio of at least 1.0, and a Conradson carbon residue greater than 4.0. This feed may also have a hydrogen to carbon ratio of less than about 1.8 and coke precursors in an amount sufficient to yield about 4 to 14% coke by weight based on fresh feed. The feed is preferably pretreated to remove sodium to a level less than 1 ppm.

With respect to the tolerance levels of heavy metals on the catalyst itself, such metals may accumulate on an FCC catalyst to levels in the range of 100 to 10,000 ppm total metals, preferably 500—5,000 ppm, of which 5 to 10%, preferably 20 to 80%, is vanadium. Such metals may accumulate on RCC catalysts to levels in the range of from about 3,000 to about 70,000 ppm of total metals, preferably 10,000 to 30,000 ppm, of which 5 to 100%, preferably 20 to 80% is vanadium.

The cracking reaction according to the methods disclosed in the above co-pending applications (Ashland's RCC process) is sufficiently severe to convert 50 to 90 percent of the carbo-metallic oil feed to gasoline per pass and produce coke in amounts of 4 to 14 percent by weight based on weight of fresh feed. This coke is laid down on the catalyst in amounts in the range of about 0.3 to 3 percent by weight of catalyst, depending upon the catalyst to oil ratio (weight of catalyst to weight of feedstock) in the riser.

The feed, with or without pretreatment, is introduced as shown in Figure 1 into the bottom of the riser along with a suspension of hot cracking catalyst prepared in accordance with this invention. Steam, naphtha, water, flue gas and/or some other diluent is preferably introduced into the riser along with the feed. These diluents may be from a fresh source or may be recycled from a process stream in the refinery. Where recycle diluent streams are used, they may contain hydrogen sulfide and other sulfur compounds which may help passivate adverse catalytic activity by heavy metals accumulating on the catalyst. It is to be understood that water diluents may be introduced either as a liquid or as steam. Water is added primarily as a source of vapor for dispersing the feed and accelerating the feed and catalyst to achieve the vapor velocity and residence time desired. Other diluents as such need not be added but where used, the total amount of diluent specified includes the amount of water used. Extra diluent would further increase the vapor velocity and further lower the feed partial pressure in the riser.

As the feed travels up the riser, it is catalytically cracked to form basically five products known in the industry as dry gas, wet gas, cat naphtha, light cycle oil, heavy cycle oil and/or slurry oil. At the upper end of the riser, the catalyst particles are ballistically separated from product vapors as previously described. The catalyst which then contains the coke formed in the riser is sent to the regenerator to burn off the coke and the separated product vapors are sent to a fractionator for further separation and treatment to provide the five basic products indicated. The regenerated catalyst is treated with an ammonia stream in the regenerated catalyst standpipe prior to transfer to the riser or withdrawal for discard. In addition to gaseous ammonia, the metals on the equilibrium catalyst can be passivated-nitrided by the addition of ammonia in diluents such as nitrogen, carbon dioxide, flue gas, fuel gas and steam and other active nitrogen containing compounds such as amines, amides, and the like.

The invention may be utilized in FCC processes. Preferred riser conditions for an FCC process employing the invention are summarized in Table A. The preferred conditions for the riser conversion reaction of Ashland's RCC processes are summarized in Table B. In these tables, the abbreviations used have the following meanings: "Temp", for temperature, "Dil." for diluent, "pp" for partial pressure, "wgt"

for weight, "V" for vapor, "Res." for residence, "C/O" for catalyst to oil ratio, "Cat." for catalyst, "bbl" for barrel, "MAT" for microactivity by the MAT test using a standard Davison feedstock, "Vel." for velocity, "cge" for charge, "d" for density and "Reg." for regenerated.

TABLE A—FCC riser conditions

| Parameter | Broad operating range | Preferred range |
|---|---|---|
| Feed Temp.— | 204,4—426,6°C (400—800°F) | (400—650°F) 204,4—343,3°C |
| Steam Temp.— | 93,3—260°C (200—500°F) | (300—400°F) 148,8—204,4°C |
| Reg. Catalyst Temp.— | 537,7—760°C (1000—1400°F) | (1175—1350°F) 635—732,2°C |
| Riser Exit Temp.— | 482,2—648,8°C (900—1200°F) | (925—1050°F) 496,1—565,5°C |
| Pressure—(absolute) | 0—7 $Kg/cm^2$ absolute (0—100 psia) | (10—50 psia) 97—3,5 $Kg/cm^2$ |
| Water/Feed— | 0.01—0.15 | 0.01—0.10 |
| Dil. pp/Feed pp— | 0.15—2.0 | 1.25—1.0 |
| Dil. wgt/Feed wgt— | ≦0.2 | 0.01/0.1 |
| V. Res. Time— | 0.01—5 | 0.05—3 sec. |
| C/O, wgt.— | 4—12 | 5—10 |
| Kg cat./hl feed—<br>(Lbs. Cat./bbl Feed)— | 0,0028—0,56 Kg/hl<br>(0.01—2.0) | (0.05—1) 0,01—0,28 Kg/hl |
| Inlet Cat. MAT— | >60 vol.% | 70—85 |
| Outlet Cat. MAT— | ≧55 vol.% | ≧65 |
| V. Vel.— | 7,5—27 m/sec (25—90 ft/sec) | (30—60) 9—18 m/sec |
| V. Vel./Cat. Vel.— | ≧1.0 | 1.2—2.0 |
| Dil. Cge. Vel.— | 1,5—27 m/sec. (5—90 ft/sec) | (10—50) 3—15 m/sec. |
| Oil Cge. Vel.— | 0,3—15 m/sec (1—50 ft/sec) | (5—50) 1,5—15 m/sec. |
| Inlet Cat. d— | 16,01—144,09 $Kg/cm^3$ (1—9 $lbs/ft.^3$) | (2—6) 32—96,06 $Kg/m^3$ |
| Outlet Cat. d— | 16,01—96,06 $Kg/m^3$ (1—6 $lbs./ft.^3$) | (1—3) 16,01—48,03 $Kg/m^3$ |

TABLE B—RCC riser conditions

| Parameter | Broad operating range | Preferred range |
|---|---|---|
| Feed Temp.— | 204,4—426,6°C (400—800°F) | (400—650°F) 204,4—343,3°C |
| Steam Temp.— | 93,3—260°C (200—500°F) | (300—400°F) 148,8—204,4°C |
| Reg. Catalyst Temp.— | 593—815,5°C (1100—1500°F) | (1275—1450°F) 690,5—787,7° |
| Riser Exit Temp.— | 482,2—760°C (900—1400°F) | (950—1100°F) 510—593°C |
| Pressure—(absolute) | 0—7 Kg/cm$^2$ absolute (0—100 psia) | (10—50 psia) 0,7—3,5 Kg/cm$^3$ |
| Water/Feed— | 0.05—0.30 | 0.05—0.15 |
| Dil. pp/Feed pp— | 0.25—3.0 | 0.1—2.5 |
| Dil. wgt./Feed wgt.— | <0.4 | 0.1—0.3 |
| V. Res. Time— | 0.1—5 | 0.5—3 sec. |
| C/O, wgt.— | 3—18 | 5—12 |
| Kg cat./hl Feed (Lbs. Cat./bbl Feed) | 0,02—1,12 Kg/hl (0.1—4.0) | (0.2—2.0) 0,05—0,56 Kg/hl |
| Inlet Cat. MAT— | >50 vol.% | ≥60 |
| Outlet Cat. MAT— | >20 vol.% | >40 |
| V. Vel.— | 7,5—27 m/sec (25—90 ft/sec) | (30—60) 9—18 m/sec. |
| V. Vel./Cat. Vel. | >1.0 | 1.2—2.0 |
| Dil. Cge. Vel.— | 1,5—27 m/sec (5—90 ft/sec) | (10—50) 3—15 m/sec. |
| Oil. Cge. Vel.— | 0,3—15 m/sec. (1—50 ft/sec) | (5—50) 1,5—15 m/sec. |
| Inlet Cat. d.— | 16,01—144,09 Kg/m$^3$ (1—9 lbs/ft$^3$) | (2—6) 32—96,06 Kg/m$^3$ |
| Outlet Cat. d— | 16,01—96,06 Kg/m$^3$ (1—6 lbs/ft$^3$) | (1—3) 16,01—48,03 Kg/m$^3$ |

In cracking carbo-metallic feedstocks in accordance with Ashland's RCC processes, the regenerating gas may be any gas which can provide oxygen to convert carbon to carbon oxides. Air is highly suitable for this purpose in view of its ready availability. The amount of air required per pound of coke for combustion depends upon the desired carbon dioxide to carbon monoxide ratio in the effluent gases and upon the amount of other combustible materials present in the coke, such as hydrogen, sulfur, nitrogen and other elements capable of forming gaseous oxides at regenerator conditions.

The regenerator is operated at temperatures in the range of about 537,7—871,1°C (1000—1600°F), preferably 690,5—787,7°C (1275—1450°F), to achieve adequate combustion while keeping catalyst temperatures below those at which significant catalyst degradation can occur. In order to control these temperatures, it is necessary to control the rate of burning which in turn can be controlled at least in part by the relative amounts of oxidizing gas and carbon introduced into the regeneration zone per unit time. With reference to Figure 1, the rate of introducing carbon into the regenerator may be controlled by regulating the rate of flow of coked catalyst through valve 40 in conduit 39, the rate of removal of regenerated catalyst by regulating valve 41 in conduit 16, and the rate of introducing oxidizing gas by the speed of operation of blowers (not shown) supplying air to the conduit 14. These parameters may be regulated such that the ratio of carbon dioxide to carbon monoxide in the effluent gases is equal to or less than about 4.0, preferably about 1.5 or less. In addition, water, either as liquid or steam, may be added to the regenerator to help control temperatures and to influence the carbon dioxide to carbon monoxide ratio.

The regenerator combustion reaction is carried out so that the amount of carbon remaining on regenerated catalyst is less than about 0.25, preferably less than about 0.05 percent on a substantially moisture-free weight basis. The residual carbon level is ascertained by conventional techniques which

include drying the catalyst at 593°C (1100°F) for about four hours before actually measuring the carbon content so that the carbon level obtained is on a moisture-free basis.

The catalyst utilized in this invention is charged to a FCC unit of the type outlined in Figure 1 or to a Reduced Crude Conversion (RCC) unit of the type disclosed in Ashland's RCC applications. Catalyst particle circulation and operating parameters are brought up to process conditions by methods well-known to those skilled in the art. The equilibrium catalyst at a temperature of 593—815,5°C (1100—1500°F) contacts the oil feed at riser wye 17. The feed can contain steam and/or flue gas injected at point 2 or water and/or naphtha injected at point 3 to aid in feed vaporization, catalyst fluidization and controlling contact time in riser 4. The catalyst and vaporous hydrocarbons travel up riser 4 at a contact time of 0.1—5 seconds, preferably 0.5—3 seconds. The catalyst and vaporous hydrocarbons are separated in vented riser outlet 6 at a final reaction temperature of 482,2—593°C (900—1100°F). The vaporous hydrocarbons are transferred to a multistage cyclone 7 where any entrained catalyst fines are separated and the hydrocarbon vapors are sent to a fractionator (not shown) via transfer line 8. The coked catalyst is then transferred to stripper 10 for removal of entrained hydrocarbon vapors and then to regenerator vessel 11 to form a dense fluidized bed 12. An oxygen containing gas such as air is admitted to the bottom of dense bed 12 in vessel 11 to combust the coke to carbon oxides. The resulting flue gas is processed through cyclone 22 and exits from regenerator vessel 11 via line 23. The regenerated catalyst is transferred to stripper 15 to remove any entrained combustion gases, treated with ammonia introduced at point 19 and then transferred to riser wye 17 via line 16 to repeat the cycle.

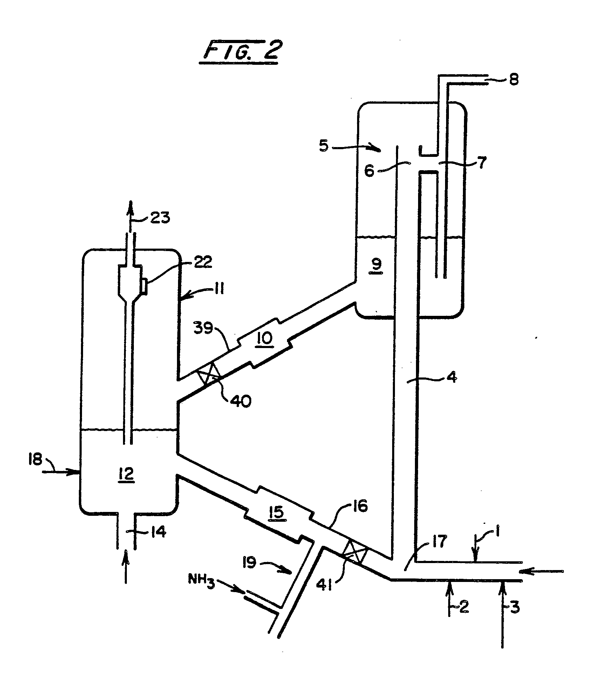

At such time that the metal level on the catalyst becomes intolerably high such that catalyst activity and selectivity declines, additional catalyst can be added and deactivated catalyst withdrawn at addition-withdrawal point 18 into the dense bed 12 of regenerator 11 and/or at addition-withdrawal point 19 into regenerated catalyst standpipe 16 as shown in Figure 2.

The regenerated equilibrium catalyst that is withdrawn at point 19 (Figure 2) is treated with gaseous ammonia alone or in admixture with diluents such as nitrogen, carbon dioxide, flue gas or steam. This treatment with ammonia converts the water soluble vanadium oxides to the water insoluble vanadium nitride. Thus the spent regenerated equilibrium catalyst containing high concentrations of vanadium in the range of 1,000—20,000 ppm can be disposed of by normal landfill techniques without release of high concentrations of vanadium into any aqueous medium present.

Passivation studies

The techniques available to determine the cracking and coking reactions of metals deposited on fluid cracking catalysts are varied. The method employed herein contacts a pure hydrocarbon with a metal loaded fluid cracking catalyst at elevated temperatures and the gaseous products were collected and analyzed by gas chromatography. The results are given in Table C.

TABLE C

| | |
|---|---|
| Conditions: | 510°C (950°F), 0 Kg/cm$^2$ (0 psig). |
| Feed: | Methylcyclohexane (MCH)—3 g/3 min. |
| Catalyst: | 20 g of 1% $V_2O_5$ on an equilibrium Super DX from FCC operations |

| Catalyst pretreat | 1 Hour—Air 593°C (1100°F) | 1 Hour—Air 1 Hour—$NH_3$ 593°C (1100°F) |
|---|---|---|
| MCH—Feed-g | 2.96 | 3.16 |
| Products-g | | |
| $H_2$ | 0.01 | 0.008 |
| $C_1$—$C_2$ | 0.05 | 0.04 |
| $C_3$—$C_6$ | 1.52 | 2.44 |
| MCH | 0.85 | 1.38 |
| BTX | 0.39 | 0.24 |
| COKE | 1.14 | 0.05 |

As noted in Table C, the treatment of the catalyst containing 1% $V_2O_5$ in air ensured conversion of the vanadium to the oxide form. The catalysts treated in air and in air followed by ammonia had methylcyclohexane processed over them at 510°C (950°F). The gaseous and liquid products were collected and analyzed by GC. Comparison of the product distributions from these two runs shows that ammonia not only passivated the undesirous hydrocarbon reactions of vanadia but improved the cracking activity of the catalyst: ammonia treatment reduced dehydrogenation by 20%, reduced methyl clipping by 20%, reduced

coking by at least 60% and increased the cracking activity of the catalyst by at least 50%. It is not proposed to define the exact mechanism for the advantages enjoyed by the invention but one explanation for the increase in cracking activity is as follows: Vanadia is tied up with an acidic site which reduces the cracking activity of the catalyst, treatment with ammonia reduces the vanadia and releases it from the acid site leaving it free to react with a hydrocarbon molecule.

Leaching—Solubility studies

In the practice of FCC processing of vacuum gas oils metals accumulation on catalysts were kept at low levels, say 1,000 ppm Ni+V. Spent and deactivated catalysts withdrawn from a FCC unit were discarded through known landfill techniques. Due to the low metals level, heavy metal leaching was not considered a problem. However, with the advent of Reduced Crude Processing (RCC), higher levels of metals are deposited on the catalyst, such as 5,000—20,000 ppm. In addition, the trend in metal content has shifted towards a high V/Ni ratio in the region of 3-5/1.

To determine the leachability of these metals, especially Ni-V-Fe-Cu, a leachability study was made on two catalysts having a low level and high level of metals content. These catalysts were treated with acidic, neutral and alkaline water to simulate acid rain, neutral and alkaline soil leach waters. The results are given in Tables D and E.

TABLE D

100 g Catalyst Hi-metals

250 ml. Extraction solution

| | PPM | | | |
|---|---|---|---|---|
| | Ni | V | Fe | Cu |
| Catalyst | 3600 | 4300 | 8800 | 85 |
| Extract solution | Metals concentration in solution | | | |
| pH 3.0 | <1 | 124 | <1 | <1 |
| pH 6.5 | <1 | 142 | <1 | <1 |
| pH 10.0 | <1 | 145 | <1 | <1 |

TABLE E

100 g Catalyst low-metals

250 ml. Extraction solution

| | PPM | | | |
|---|---|---|---|---|
| | Ni | V | Fe | Cu |
| Catalyst | 200 | 600 | 5000 | 30 |
| Extract solution | Metals concentration in solution | | | |
| pH 3.0 | <1 | 5 | <1 | <1 |
| pH 6.5 | <1 | 22 | <1 | <1 |
| pH 10.0 | <1 | 58 | <1 | <1 |

The results obtained on extracting the low and high metals containing catalysts show that Ni-Fe-Cu are not leached to any extent. However, vanadium is leached in any type water to a large extent, as shown in Tables D and E.

To demonstrate the unique properties of a vanadium containing catalyst that had been treated with ammonia, the vanadium containing catalyst that had been treated with ammonia in Table C was tested in the same water leachability studies demonstrated in Tables D and E. The amount of vanadium leached was non-detectable, that is <1 ppm in the leach-extraction solution. This insolubility of vanadium (ammonia treat) is attributed to the formation of vanadium nitride, a highly insoluble compound.

Industrial applicability

The invention is useful in the catalytic conversion of both FCC and RCC feeds as described above. The present invention is particularly useful in the catalytic cracking of high boiling carbo-metallic feedstocks to lower boiling hydrocarbon fractions in the liquid fuel range. Examples of these oils are reduced crudes,

topped crude, residuum containing high values of Conradson carbon and contaminant metals, especially vanadium. The application of the principles of this invention will lead to contaminant metal passivation as to lowered rates of dehydrogenation, methyl clipping and coking. An added feature is the conversion of vanadia on discarded spent cracking catalyst to a water insoluble form to facilitate disposal by landfill techniques.

**Claims**

1. A process for passivating a metal on a zeolite containing fluid cracking catalyst which contains contaminant metals deposited thereon from the conversion of a hydrocarbon oil feed containing at least about 1 part per million vanadium and containing substantial Conradson carbon to lighter oil products; said process comprising in combination:

(a) contacting said feed under conversion conditions in a conversion zone with a cracking catalyst comprising crystalline zeolite;

(b) carbonaceous material and metals being deposited on said catalyst by contact with said oil feed in said cracking zone;

(c) regenerating said catalyst with deposits of carbonaceous material and metals in the presence of an oxygen-containing gas;

(d) stripping of said regenerated catalyst followed by;

(e) contact with a reducing-nitriding gas; and

(f) recycling the major portion of said regenerated-reduced-nitrided catalyst to the conversion zone for contact with fresh feed and/or withdrawal of a minor portion of said regenerated-reduced-nitrided catalyst for disposal.

2. The process of Claim 1 wherein the zeolite containing fluid cracking catalyst contains one or more zeolites in about at least 10 wt.% up to about 40 wt.% concentration and wherein the hydrocarbon oil feed is a reduced crude or crude oil containing at least about 2 wt.% Conradson carbon and at least 5 ppm metals as nickel and vanadium or is a reduced crude or crude oil containing about 5 to about 200 ppm of metals consisting of nickel, vanadium, iron and copper and having a Conradson carbon value of 10 wt.% or less or is a vacuum gas oil containing 0—25 wt.% reduced crude and containing about 0.1 to about 5 ppm metals as nickel, vanadium, iron and copper and having a Conradson carbon value less than about 2 wt.%.

3. The process of Claim 1 or 2 wherein the contaminant metals on the equilibrium catalyst range from about 1,000 ppm to 20,000 ppm nickel plus vanadium wherein the metals deposited on the equilibrium catalyst are principally nickel and vanadium with a vanadium to nickel weight ratio greater than one.

4. The process of Claim 1 or 2 wherein a metal on the equilibriuum catalyst is passivated with ammonia at a temperature in the range of about 538—816°C (1,000—1,500°F) and a pressure greater than 0 $Kg/cm^2$ (gauge) (0 psig).

5. The process of Claim 1 or 2 wherein a metal on the equilibrium catalyst is passivated with ammonia after the regenerated catalyst stripper and before the riser.

6. The process of Claim 1 or 2 wherein a metal on the equilibrium catalyst is passivated with ammonia in the regenerated catalyst stripper and wherein the metal passivating agent is gaseous ammonia.

7. The process of Claim 1 or 2 wherein the metal passivating agent is ammonia present in an inert diluent such as nitrogen, carbon dioxide, flue gas, fuel gas and steam or wherein the reducing nitriding gas is an amine.

8. The process of Claim 1 or 2 wherein a metal on the equilibrium catalyst is passivated with ammonia in the catalyst withdrawal line.

9. The process of Claim 1 wherein the metal passivated with ammonia is vanadium.

10. The process of Claim 1 or 2 wherein vanadium is treated with ammonia and converted to the water insoluble vanadium nitride.

**Patentansprüche**

1. Verfahren zum Passivieren eines Metals auf einen zeolitenthaltenden, fließfähigen Spaltkatalysator, der darauf niedergeschlagen verunreinigende Metalle aus der Umwandlung einer Kohlenwasserstoffölbeschickung enthält, die wenigstens etwa 1 ppm Vanadin und erhebliche Mengen an Conradson Kohlenstoff enthält für die Überführung in leichtere Ölprodukte, gekennzeichnet, durch die Kombination der nachfolgenden Verfahrensschritte:

a) inberührungbringen der Beschickung unter Umwandlungsbedingungen in einer Umwandlungszone mit einem kristallinen Zeolit aufweisenden Spaltkatalysator;

b) wobei kohlenstoffartiges Produkt und Metalle auf dem Katalysator durch inberührungkommen mit der Ölbeschickung in der Spaltzone niedergeschlagen werden;

c) regenerieren des Katalysators mit den Niederschlägen aus kohlenstoffhaltigem Material und Metallen in Gegenwart eines sauerstoffenthaltenden Gases;

d) abziehen des regenerierten Katalysators und sodann

e) inberührungbringen mit einem reduzierenden nitridierenden Gas, sowie

f) zurückführen des Hauptanteils des regenerierten, reduzierten, nitridierten Katalysatörs in die

Umwandlungszone für ein Inberührungbringen mit frischer Beschickung und/oder abziehen eines kleinen Teils des regenerierten, reduzierten, nitridierten Katalysators für die weitere Verwendung.

2. Verfahren nach Anspruch 1, dadurch gekennzeichnet, daß der zeolitenthaltende fluidisierte Spaltkatalysator ein oder mehr Zeolite in einer Menge wenigstens von etwa 10 Gew.% bis zu etwa 40 Gew.% Konzentration enthält, sowie die Kohlenwasserstoffölbeschickung ein reduziertes Rohöl oder Rohöl ist, das wenigstens etwa 2 Gew.% Conradson Kohlenstoff und wenigstens 5 ppm Metalle wie Nickel oder Vanadin enthält oder, es ein reduziertes Rohöl oder Rohöl ist, das etwa 5 bis etwa 200 ppm Metalle enthält bestehend aus Nickel, Vanadin, Eisen und Kupfer und ein-en Conradson Kohlenstoffwert von 10 Gew.% oder weniger enthält, oder es ein Vakuumgasöl ist, das 0—25 Gew.% reduziertes Rohöl und etwa 0.1 bis etwa 5 ppm Metalle wie Nickel, Vanadin, Eisen und Kupfur enthält und einen Conradson Kohlenstoffwert von kleiner als etwa 2 Gew.% aufweist.

3. Verfahren nach Anspruch 1 oder 2, dadurch gekennzeichnet, daß die verunreinigenden Metalle sich auf auf dem Gleichgewichtskatalysator sich auf etwa 1.000 bis 2.000 ppm Nickel plus Vanadin belaufen, wobei die Metalle auf dem Gleichgewichtskatalysator niedergeschalgen im wesentlichen Nickel und Vanadin sind, wobei sich das Gewichtsverhältnis von Vanadin zu Nickel auf größer als 1 beläuft.

4. Verfahren nach Anspruch 1 oder 2, dadurch gekennzeichnet, daß ein Metall auf dem Gleichgewichtskatalysator mit Ammoniak bei einer Temperatur von etwa 538—816°C und einem Druck von größer als 1 kg/cm$^2$ passiviert wird.

5. Verfahren nach Anspruch 1 oder 2, dadurch gekennzeichnet, daß ein Metall auf dem Gleichgewichtskatalysator mit Ammoniak passiviert wird, nach dem der Katalysator regeneriert worden ist und bevor derselbe in das Reaktionsgefäß eingeführt wird.

6. Verfahren nach Anspruch 1 oder 2, dadurch gekennzeichnet, daß ein Metall auf dem Gleichgewichtskatalysator mit Ammoniak in dem regenerierten Katalysator passiviert wird und das Passivierungsmittel gasförmiger Ammoniak ist.

7. Verfahren nach Anspruch 1 oder 2, dadurch gekennzeichnet, daß das Passivierungsmittel Ammoniak in einem inerten Verdünnungsmittel wie Stickstoff, Kohlendioxid, Abgas, Brennstoffgas und Dampf ist, wobei das reduzierende nitridierende Gas ein Amin ist.

8. Verfahren nach Anspruch 1 oder 2, dadurch gekennzeichnet, daß ein Metall auf dem Gleichgewichtskatalysator mit Ammoniak in der Abzugsleitung für den Katalysator passiviert wird.

9. Verfahren nach Anspruch 1, dadurch gekennzeichnet, daß das mit Ammoniak passivierte Metall Vanadin ist.

10. Verfahren nach Anspruch 1 oder 2, dadurch gekennzeichnet, daß Vanadin mit Ammoniak behandelt und in das wasserunlösliche Vanadiumnitrid umgewandelt wird.

**Revendications**

1. Un procédé pour la passivation d'un métal sur un catalyseur de craquage fluide contenant de la zéolite qui contient des impuretés métalliques déposées dessus, provenant de la conversion d'un alimentation d'huile hydrocarbonée, contenant au moins environ une partie par million de vanadium et contenant une proportion de carbone Conradson, len produits huileux plus léger, ce procédé consistant, en combinaison:

(a) à mettre en contact l'alimentation, dans des conditions de conversion, dans une zone de conversion, avec un catalyseur de craquage comprenant de la zéolite cristalline;

(b) de la matière carbonée, et des métaux se déposant sur le catalyseur par contact avec l'alimentation d'huile dans la zone de craquage;

(c) à régénérer le catalyseur qui se dépose sur la matière carbonée et les métaux en présence d'un gaz contenant de l'oxygène;

(d) à rectifier le catalyseur régenéré et ensuite;

(e) à le mettre en contact avec un gaz réducteur de nitruration; et

(f) à recycler la majeure partie du catalyseur régénéré réduite et nitruré vers la zone de conversion pour le contact avec une alimentation fraîche et/ou le retrait d'une mineure partie du catalyseur régénéré, réduit et nitruré, en vue du rejet.

2. Le procédé de la revendication 1, dans lequel le catalyseur de craquage fluide contenant de la zéolite contient une ou plusieurs zéolites à une concentration d'au moins environ 10% en poids jusqu'à environ 40% en poids, et dans lequel l'alimentation d'huile hydrocarbonée est un brut réduit ou un pétrole brut contenant au moins environ 2% en poids de carbone Conradson et au moins 5 ppm de métaux sous forme de nickel et de vanadium, ou est un brut réduit ou un pétrole brut contenant environ 5 à environ 200 ppm de métaux formés de nickel, de vanadium, de fer et de cuivre et ayant un taux de carbone Conradson de 10% ou moins en poids ou est un gazole sous vide contenant 0—25% en poids de vbrut réduit et contenant environ 0,1 à environ 5 ppm de métaux sous forme de nickel, de vanadium, de fer et de cuivre et ayant un taux de carbone Conradson inférieure à environ 2% en poids.

3. Le procédé de la revendication 1 ou 2, dans lequel les impuretés métalliques sur le catalyseur à l'équilibre varie d'environ 1000 ppm à 20 000 ppm de nickel plus vanadium, dans lesquels les métaux déposés sur le catalyseur à l'équilibre sont principalement du nickel et du vanadium, avec un rapport de poids du vanadium au nickel plus grand que 1.

4. Le procédé de la revendication 1 ou 2, dans lequel on passive un métal sur le catalyseur à l'équilibre avec de l'ammoniac à une température de l'ordre d'environ 538 à 816°C (1000 à 1500°F) et à une pression supérieure à 0 kg/cm$^2$ (au manomètre) (0 psig).

5. Le procédé de la revendication 1 ou 2, dans lequel on passive un métal sur le catalyseur à l'équilibre avec de l'ammonia après le rectificateur de catalyseur régénéré et avant la colonne montante.

6. Le procédé de la revendication 1 ou 2, dans lequel on passive un métal sur le catalyseur à l'équilibre avec de l'ammoniac dans le rectificateur de catalyseur régénéré et dans lequel l'agent de passivation de métal est l'ammoniac gazeux.

7. Le procédé de la revendication 1 ou 2, dans lequel l'agent de passivation de métal est l'ammoniac présent dans un diluant inerte tel que l'azote, le dioxyde de carbone, un gaz de carneau, un gaz combustible et la vapeur d'eau ou dans lequel le gaz réducteur de nitruration est une amine.

8. Le procédé de la revendication 1 ou 2, dans lequel on passive un métal sur le catalyseur à l'équilibre avec le l'ammoniac dans le tuyau de retrait du catalyseur.

9. Le procédé de la revendication 1, dans lequel le métal passivé avec de l'ammoniac est le vanadium.

10. Le procédé de la revendication 1 ou 2, dans lequel on traite le vanadium par l'ammoniac et on le convertit en nitrure de vanadium insoluble dans l'eau.

FIG. 1

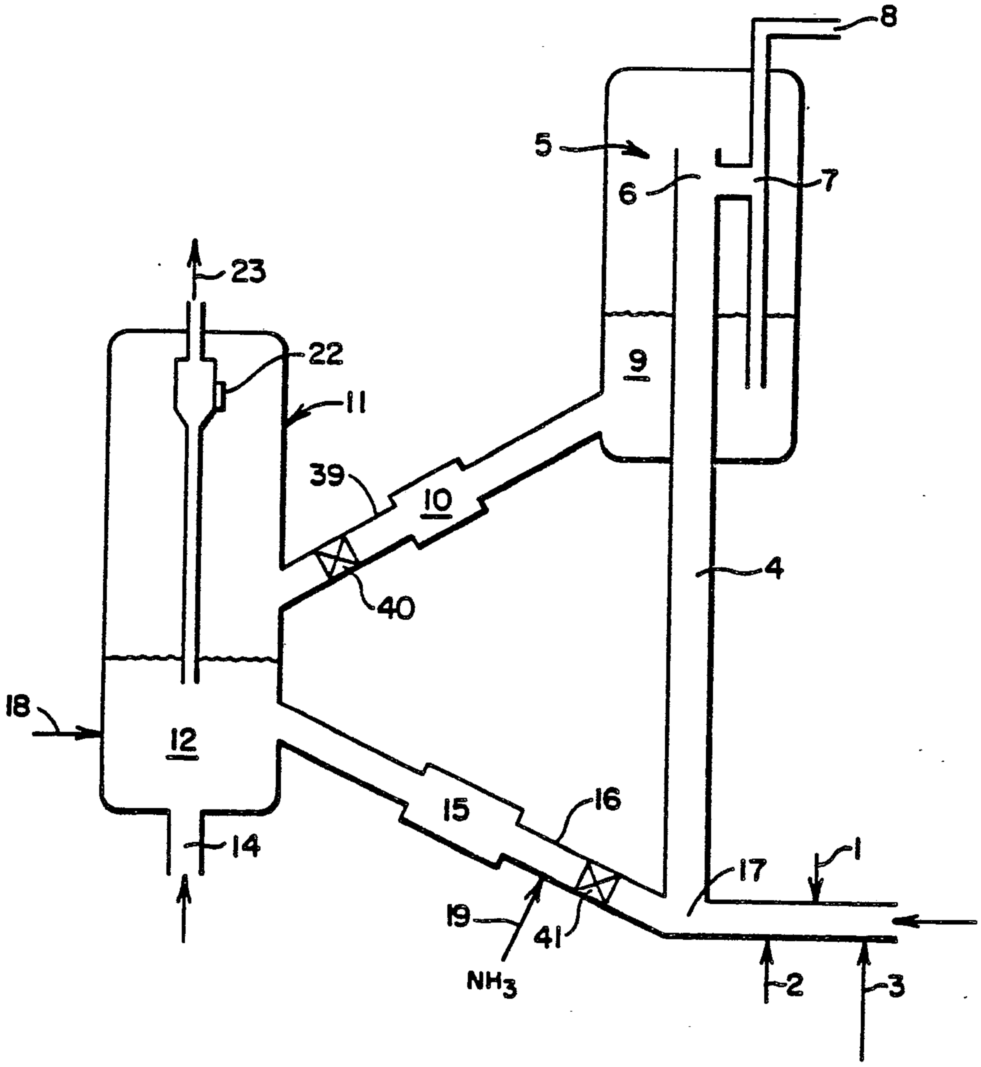

FIG. 2